# EUROPÄISCHE PATENTANMELDUNG

(11) **EP 1 193 009 A2**
(43) Veröffentlichungstag der Anmeldung: **03.04.2002**
(21) Anmeldenummer: 01250333.0
(22) Anmeldetag: 21.09.2001
(51) Int. Cl.: B22F 3/11, B22F 8/00

(54) **Poröse Bauteile sowie ein Verfahren zu deren Herstellung**

(30) Priorität: 29.09.2000 DE 10049759
(71) Anmelder: FRAUNHOFER-GESELLSCHAFT ZUR FÖRDERUNG DER ANGEWANDTEN FORSCHUNG E.V., 80636 München (DE)
(72) Erfinder: Grützner, Heinrich, 27721 Platjenwerbe (DE)
(74) Vertreter: Pfenning, Meinig & Partner

(57) **Zusammenfassung**

Die vorliegende Erfindung betrifft ein poröses Bauteil sowie ein Verfahren zu dessen Herstellung. Bei der Herstellung werden aus der spanabhebenden Metallbearbeitung stammende feuchte Metallspäne zunächst zumindest bis auf einen Restfeuchtegehalt von maximal 5% entfeuchtet, anschließend in einen Behälter gefüllt oder auf eine Aufbringungsfläche ausgelegt und schließlich mit oder ohne Druckbelastung gesintert.

## Beschreibung

Die vorliegende Erfindung betrifft poröse Bauteile bzw. Werkstoffe sowie ein Verfahren zu deren Herstellung.

Das Interesse, besonders an hochporösen metallischen Werkstoffen ist in der jüngsten Vergangenheit stark gestiegen. Ursachen hierfür sind positive Eigenschaften besonders hinsichtlich des geringen spezifischen Gewichtes, der hohen Temperaturbeständigkeit sowie der stoßenergieabsorbierenden, schalldämmenden und wärmedämmenden Eigenschaften dieser Werkstoffe. Die Anwendungsgebiete dieser offenporigen metallischen Werkstoffe sind sehr vielseitig. So eignen sie sich insbesondere
- für Leichtbauelemente, auch als Sandwich-Bauteile
- Filter für Entstaubungsanlagen bei gasförmigen Medien mit und ohne Feststoffanteilen, insbesondere für höhere Temperaturen, wie sie bei Verbrennungsanlagen auftreten
- Filter für Abgasanlagen von Verbrennungsmotoren, hier sind insbesondere Rußpartikel Filter für stationäre bzw. in Fahrzeugen befindliche Dieselmotoren zu nennen
- Filter für Flüssigkeiten und Schmelzen
- Trägerwerkstoff für Membranfilter
- Katalysatorträger für Verbrennungsanlagen und Abgasanlagen
- Katalysatorträger für chemische Prozesse
- Herstellen von Verbundwerkstoffen für Leichtbauwerkstoffe, Bremsen, Friktionswerkstoffe, Lager
- poröse Formen für das Tiefziehen von Kunststoffen
- Schalldämmung, Schockabsorption, Schwingungsdämpfung, Panzerungen, Splitterschutz, Wärmedämmung, Wärmetauscher für Rekuperatoren sowie als Ausgangsstoffe für die Schmuckherstellung.

Es ist bekannt, poröse Werkstoffe nach dem Stand der Technik durch das Sintern von Pulvern bzw. Fasern herzustellen, d.h. durch eine unter Umständen druckbeaufschlagte thermische Belastung dieser Ausgangsteile, wodurch sich Brücken zwischen den einzelnen Ausgangsteilen, z.B. Fasern, bilden und sich somit ein zusammenhängendes Bauteil ergibt.

Für die Fertigung hochporöser metallischer Bauteile sind Ausgangsmaterialien aus hochwertigen Rohstoffen vonnöten. Diese müssen nach dem Stand der Technik auf eine besonders aufwendige Art hergestellt werden, so ist es z.B. üblich, im wesentlichen gerade Fasern aber auch Pulver oder Hohlkugeln in dafür speziell konstruierten Anlagen herzustellen. Abgesehen von der für einige Anwendungen unzureichenden Porosität der Werkstoffe, welche aus diesen Vormaterialien hergestellt werden können, haben diese Werkstoffe den Nachteil, daß ihre Herstellung extrem kostenintensiv ist.

Die DE 195 07 645 C1 beschreibt ein Verfahren zur Herstellung eines Filters zur Fluidreinigung und einen nach diesem Verfahren hergestellten Filter. Bei diesem Filter handelt es sich um ein poröses Bauteil, wobei als Ausgangsmaterialien zur Herstellung des Bauteils mit Kühlschmierstoffen behaftete Schleifschlämme und Metallspäne verwendet werden. Die Entfernung der Kühlschmierstoffe erfolgt soweit, daß die Ausgangsmaterialien nur noch mit Kohlenwasserstoffen verunreinigt sind. Nach einem schichtweisen Anordnen der Ausgangsmaterialien kommt es zu einem Sintern des Rohlings.

Zur Entfeuchtung der Ausgangsmaterialien ist in der DE 195 07 645 C1 lediglich eine Entfeuchtung durch Pressen erwähnt, dies bewirkt jedoch nach Fachkenntnis nur eine Entfeuchtung auf maximal 20 Gewichtsprozent. Es hat sich somit gezeigt, daß das Sinterprodukt, insbesondere bei Sauerstoffzufuhr während des Sinterns insbesondere durch das enthaltende Restöl aufkohlt bzw. verbrennt. Eine solche Aufkohlung führt zu einer Inhomogenität, die für qualitativ hochwertige poröse Bauteile, insbesondere für Filter nicht akzeptabel ist.

Die Auslegeschrift 1 273 141 B beschreibt ein Verfahren und eine Vorrichtung zum Herstellen von Werkstoffen und Formkörpern aus Metallfasern, wobei hierzu die Faserteilchen gesiebt, mittels eines Vibrators in Bewegung versetzt und auf ein Transportband gebracht werden.

Die österreichische Patentschrift Nr. 249387 beschreibt ein Verfahren zum Herstellen poröser Werkstoffe durch Pressen und Sintern von Metallfasern. Hierbei werden zur Herstellung poröser Werkstücke aus Metallfasern mit einer Porösität von 80 - 97% die Metallfasern in eine Sinterform aus Keramik gefüllt, wobei das Sintern unter Schutzgas erfolgt, die Sintertemperatur unterhalb der Soliduslinie des Fasermetalls liegt und beim Sintern Druck durch Aufsetzen eines Deckels ausgeübt wird.

Schließlich beschreibt die deutsche Offenlegungsschrift 19 11 941, daß bei der Herstellung von hochporösen Sinterformkörpern Metallfasern aus Nickel und seinen Legierungen zu Anwendung kommen.

Aufgabe der vorliegenden Erfindung ist es, hochporöse Werkstoffe bzw. Bauteile sowie ein Verfahren zu deren Herstellung zur Verfügung zu stellen, wobei die Herstellung bei Wahrung höchster Qualität einerseits kostengünstig sein soll und außerdem eine sehr hohe Porösität bzw. spezifische Oberfläche gegeben sein soll.

Diese Aufgabe wird durch ein Herstellungsverfahren nach Patentanspruch 1 sowie durch Bauteile nach Patentanspruch 17 gelöst.

Bei dem Verfahren zur Herstellung poröser Bauteile bzw. Werkstoffe dienen als Ausgangsmaterial aus der spanabhebenden Metallbearbeitung stammende Metallspäne. Diese Metallspäne fallen in einem sog. "Schleifschlamm" an. Dieser Schleifschlamm enthält neben den Metallspänen große Mengen von Kühlschmierstoffen, welche zur Kühlung bei den Spanverfahren verwendet wurden. Solche Kühlmittel sind vorwiegend Wasser bzw.

Öle, es ist jedoch auch möglich, daß der Schleifschlamm darüber hinaus fremde Feststoffe, wie etwa Sand etc., enthält. Der Schleifschlamm bzw. die aus der spanabhebenden Metallbearbeitung stammenden feuchten Metallspäne werden beim erfindungsgemäßen Herstellungsverfahren zunächst zumindest bis auf einen Restfeuchtegehalt entfeuchtet, getrocknet bzw. von fremden Feststoffen befreit, wobei geringe Mengen von Schleifscheibenabrieb tolerierbar sind, (im folgenden wird "entfeuchtet" als Befreiung von Wasser, Öl sowie fremden Feststoffen verstanden). Entgegen der Meinung der Fachwelt ist es nicht notwendig, die Metallspäne vollständig von Feuchtigkeit zu befreien. Es ist möglich, einen Restfeuchtegehalt von bis zu 5% bei den weiterbehandelten Metallspänen, welche gesintert werden, zuzulassen. Der Restfeuchtegehalt ergibt sich hierbei als der Quotient aus dem Gewicht der feuchten bzw. Fremdbestandteile zu dem Gesamtgewicht von feuchten bzw. Fremdbestandteilen sowie dem Nutzmetall. Die verbleibende Restfeuchte, überwiegend Restöl, dampft während des Sintervorganges ab. Anschließend werden diese entfeuchteten Metallspäne in einen Behälter gefüllt oder auf eine Aufbringungsfläche ausgelegt und schließlich mit oder ohne Druckbelastung gesintert. Es ist jedoch auch möglich, die Entfeuchtung und den Sintervorgang in einem entsprechend ausgelegten Ofen in einem Arbeitsgang durchzuführen.

Aus der spanabhebenden Metallbearbeitung stammende feuchte Metallspäne als Ausgangsstoffe des erfindungsgemäßen Herstellungsverfahren haben besondere Vorteile. Als spanabhebende Metallbearbeitung wird insbesondere Schleifen mit Schleifsteinen bzw. - scheiben, aber auch alle anderen Verfahren, wie etwa Drehen, Stoßen etc. verstanden.

Zum einen weisen sie aufgrund ihres Entstehens, bei dem z.B. eine Schneide oder eine Schleifscheibe den Span aus einem Vollmaterial herausschneidet bzw. - reißt, eine mikroporöse bzw. geometrisch sehr unregelmäßige Oberfläche auf, welche die Gesamtoberfläche des Spans gegenüber herkömmlichen Ausgangsstoffen in der Fasermetallurgie erheblich vergrößert, was sich besonders positiv bei der Verwendung des porösen Bauteils als Filter bzw. Katalysatorträger auswirkt.

Die aus der spanabhebenden Metallbearbeitung stammenden Metallspäne haben außerdem den erheblichen Vorteil, daß sie gekrümmt sind. Diese Krümmung, verbunden mit der oben erwähnten Rauhigkeit der Spanoberfläche, führt dazu, daß die Späne sich ineinander verhaken und somit bereits vor dem Sintervorgang aufgrund von Form- bzw. Reibschluß einen Verbund bilden, so daß beim Sintern bereits wenige Metallstege zwischen benachbarten Spänen ausreichen, um einen sehr festen Verbund zu bilden. Bei sehr langen Spänen, welche z.B. als längere Spiralen anfallen, kann es angezeigt sein, die Metallspäne nach ihrer Entfeuchtung und vor dem Füllen in den Behälter zu zerkleinern, z.B. in einer Kreuzschlagmühle. Kürzere Späne können z.B. vor dem Füllen in den Behälter oder dem Aufbringen auf die Aufbringfläche gesiebt werden, wodurch ein hohes Porenvolumen und eine gleichmäßige Dichteverteilung im Bauteil erreicht wird, es ist auch eine thermische Behandlung vor dem Einfüllen in den Behälter möglich. Durch das Mahlen in unterschiedlichen Mühlen und/oder Glühen bei unterschiedlichen Temperatur- und Zeitprogrammen und Ofenatmosphären kann z.B. die Schütt- und Rieselfähigkeit des Materials eingestellt werden. Auch durch eine Änderung der Spanlänge können damit Eigenschaften des fertigen porösen Bauteils beeinflußt werden.

Ein Vorteil des Herstellungsverfahrens liegt darin, daß die Ausgangsstoffe extrem kostengünstig sind. Sowohl in der Zementindustrie, als auch bei der bisherigen Verarbeitung in Sinteranlagen mit anschließendem Einsatz des Sinters im Hochofen oder zur Eisenherstellung in Direktreduktionsanlagen werden hochlegierte Stahlabfälle, teils aus gesetzlichen Bestimmungen heraus, nicht angenommen. Besonders Schleifschlämme, welche Metallspäne mit einem hohen Anteil an chromlegierten Stählen aufweisen, wurden bisher primär kostenintensiv auf Deponien entsorgt. Diese Schleifschlämme konnten somit als eisenhaltige Sekundärrohstoffe in der Eisen- und Stahlindustrie sowie in der Zement- oder anorganisch-chemischen Industrie nicht weiter verwendet werden. Diese Schleifschlämme, welche z.B. bei der Herstellung von Eßbestecken bzw. im Gerätebau anfallen, haben somit durch diese Erfindung einen neu geschaffenen Anwendungsbereich in der Sinterindustrie.

Diese Erkenntnis steht den bisherigen Erkenntnissen in der Fachwelt diametral entgegen (s. hierzu: 1. M. Weber u.a.: Abschlußbericht, Juni 1998, zum Vorhaben "Pulvermetallurgische Verwertung aufbereiteter Schleifschlämme", Förderkennzeichen 1480976, Projektträger Umweltbundesamt Berlin; 2. Diskussionsbeiträge im Fachausschuß 23 "Abfälle aus der Metallbearbeitung" der Arbeitsgemeinschaft Wärmebehandlung und Werkstofftechnik, besonders bei der Vorstellung des o.a. Abschlußberichts).

Vorteilhafte Weiterbildungen des erfindungsgemäßen Herstellungsverfahren werden in den abhängigen Patentansprüchen angegeben.

Die Entfeuchtung, d.h. die Isolierung der Metallspäne aus dem Schleifschlamm, d.h. die Entfernung von Wasser, Öl sowie anderen Stoffen kann mittels verschiedener Verfahren geschehen. So ist vorteilhaft, in einem ersten Schritt die Entfeuchtung durch Abschöpfen von Feuchtigkeit in Absetzbehälter zu erreichen. Alternativ bzw. ergänzend ist auch Zentrifugieren oder Pressen des Schleifschlamms möglich. Hiernach kann der Restfeuchtegehalt, welcher bis zu 30 Gewichtsprozent des Schleifschlamms beträgt, weiter gesenkt werden. Insbesondere das dem Metall lange anhängende Öl kann hierbei auch als Wertstoff wiedergewonnen werden. Dies ist z.B. durch eine Wäsche mit üblichen Lösemitteln oder überkritischen CO₂, wobei CO₂ unter Druck als Lösemittel wirkt, möglich. Alternativ sind Extraktionsverfahren oder vakuumthermische Verfahren möglich.

Es ist möglich, nach dem Füllen der aufbereiteten bzw. weiterbehandelten Metallspäne in den Behälter, in welchem die weiterbehandelten Metallspäne später gesintert werden, eine Zwischenverdichtung durchzuführen, welche durch Stampfen, Rütteln oder Klopfen vollzogen wird. Hiermit wird es möglich, die Zwischenräume zwischen den weiterbehandelten Metallspänen zu verringern. Zur Begriffsklärung sei ausgeführt, daß unter "weiterbehandelten Metallspänen" in der vorliegenden Anmeldung die bis auf den Restfeuchtegehalt entfeuchteten Metallspäne, ggf. in gesiebter, zerkleinerter und/oder thermisch behandelter Form, verstanden werden.

Der Behälter, in welchem die weiterbehandelten Metallspäne vor dem Sintern eingefüllt werden, ist vorzugsweise aus einem keramischen Werkstoff. Dieser kann topfartig ausgeführt sein, zur Herstellung rohrförmiger Bauteile ist der Behälter als auf einer Stirnfläche offener Hohlzylinder ausgeführt, in welchen die weiterbehandelten Metallspäne eingefüllt werden und ggf. zwischenverdichtet werden. Zur Herstellung langgestreckter Bauteile kann auch ein Durchlaufofen verwendet werden, hierzu werden die weiterbehandelten Metallspäne auf die Aufbringfläche eines Förderbandes eines Durchlaufofens gesetzt. Mit dem erfindungsgemäßen Herstellungsverfahren können auch Sandwich-Strukturen hergestellt werden, welche im Leichtbau besondere Vorzüge aufweisen. Hierzu werden zur Herstellung von Sandwich-Strukturen die weiterbehandelte Metallspäne zwischen Decklagen metallischer Fläche in den Behälter gefüllt, hierbei kann auch eine Schichtung mehrerer solcher Sandwich-Lagen vorgesehen werden. Schließlich ist es möglich, daß die weiterbehandelten Metallspäne zur Herstellung von Faservliesen auf der Aufbringfläche ausgelegt werden, wobei sich benachbarte Teile zumindest tangieren. Darüber hinaus ist auch eine kontinuierliche Formgebung durch Extrudieren und Walzen zur Produktion von flachen bzw. rohrförmigen Bauteilen, z.B. Filterkerzen, möglich.

Beim abschließenden Sintern der weiterbehandelten und ggf. zwischenverdichteten Metallspäne können auf mehrere Weisen Eigenschaften des späteren Bauteils beeinflußt werden. Während die vor dem Sintern durchzuführenden Schritte, mit Ausnahme der fakultativen thermischen Behandlung der Metallspäne vor dem Befüllen des Behälters, im wesentlichen bei Raumtemperatur ablaufen können, werden beim Sintervorgang die in den Behälter gefüllten, ggf. zwischenverdichtete weiterbehandelten Metallspäne in einem Ofen einem vorgegebenen Temperatur- und Zeitprogramm in einer zu bestimmenden Atmosphäre ausgesetzt. Hierbei kann zusätzlich Druck mechanisch auf die Befüllung des Behälters mit den ggf. zwischenverdichteten weiterbehandelten Metallspänen ausgeübt werden.

Eine besonders vorteilhafte Variante ist, daß die Sinterung unter Vakuumbedingungen erfolgt. Dies ist besonders bei sehr dünnen Metallspänen vorteilhaft, welche sonst bei einer hohen thermischen Belastung durchoxidieren würden. Die Temperatur beim Sintern beträgt vorzugsweise zwischen 0,65 und 0,95 der Solidustemperatur T_{S} des Materials, diese wird vorzugsweise über einen Zeitraum von 0,2 - 2 Stunden aufrechterhalten. Bei mehrphasigen Werkstoffen ist die Sintertemperatur so hoch zu wählen, daß eine Phase bereits angeschmolzen wird. Darüber hinaus kann auf die Füllung des Behälters mit den weiterbehandelten und ggf. zwischenverdichteten Metallspäne ein zusätzlicher Druck, etwa mit einer auf die freie Oberfläche der Füllung wirkende Druckplatte, ausgeübt werden. Der Druck beträgt hierbei vorzugsweise zwischen 0 bis 0,1 N/mm².

Die erfindungsgemäße Herstellungsmethode eignet sich insbesondere für aus der Metallbearbeitung stammende Späne, welche durch Schleifen hergestellt werden. Diese Späne sind durch den Bearbeitungsvorgang stark verformt und fallen gekrümmt oder zerfasert an. Im Zuge der Weiterbehandlung der Metallspäne kann es vorteilhaft sein, zur besseren Handhabbarkeit die Längen der aus der Metallbearbeitung stammenden Späne so zu verringern, daß sie vereinzelt werden können. Die thermische Behandlung zur Verbesserung der Mahlbarkeit sowie der Schütt- und Rieselfähigkeit vor Befüllen des Behälters findet hierbei vorzugsweise bei Temperaturen zwischen 200°C und 800°C statt.

Es sind verschiedene Materialien für die aus der Metallbearbeitung stammenden Späne möglich. Dies sind neben chromlegierten Stählen, vorzugsweise aus den Gruppen DIN EN 10084 und DIN EN 10088, und andere Stahl- und Gußeisenwerkstoffen auch Nickelbasis-Werkstoffe, Buntmetalle, Edelmetalle und Leichtmetalle.

Weitere vorteilhafte Weiterbildungen des erfindungsgemäßen Herstellungsverfahrens werden in den übrigen abhängigen Patentansprüchen angegeben.

Neben dem erfindungsgemäßen Herstellungsverfahren wird ein nach diesem Herstellungsverfahren hergestelltes Bauteil beansprucht, welches zumindest bereichsweise porös ist. Als Porösität wird hierbei der Quotient aus der Differenz des spezifischen Gewichts des ursprünglichen Metallteils und des spezifischen Gewichts des fertigen (porösen) Bauteils und dem spezifischen Gewicht des ursprünglichen Metallteils verstanden (in Prozent). Die Porösität des Bauteils beträgt vorzugsweise zwischen 40% und 97%, besonders vorzugsweise 70% - 95%. Hierbei beträgt das spezifische Gewicht des Bauteils vorzugsweise das 0,03 bis 0,6-fache eines aus dem gleichen massiven Material hergestellten.

Es ist besonders vorteilhaft, daß das Bauteil ein Sandwich-Bauteil ist, welches zwischen metallischen Blechen gesinterte Abschnitte enthält. Es sind jedoch auch andere Ausführungen des Bauteils möglich, dies sind Bauteile für sämtliche in der Beschreibungseinleitung genannte Anwendungsgebiete.

Zusammenfassend kann festgestellt werden, daß durch die Verwendung von Ausgangsmaterialien, die gemeinhin als Abfall deklariert werden, ein großer Kostenvorteil gegeben ist. Die Einstellung der Porengröße und des Porenanteils erfolgt bei Herstellverfahren nach dem Stand der Technik in der Regel durch die Wahl der Ausgangswerkstoffe oder das Produktionsverfahren. Bei der hier beschriebenen Erfindung können durch die Wahl geeigneter Herstellparameter sehr unterschiedliche Eigenschaftsprofile der Werkstoffe hinsichtlich Strömungswiderstand, Porenanzahl, -verteilung und - größe, spezifisches Gewicht etc. eingestellt werden. Durch die Zwischenverdichtung oder nur Oberflächenbelastung können gradierte Werkstoffe mit kontinuierlich sich über dem Querschnitt ändernder Porösität und Strömungswiderstand hergestellt werden. Die Beständigkeit bei hohen Temperaturen sowie die bessere Abriebfestigkeit gegenüber partikelbelasteten Medien bieten deutliche Vorteile gegenüber den üblichen Filtermaterialien auf Kunststoffbasis. Verglichen mit keramischen Filtermedien ist die sehr gute Temperaturwechselbeständigkeit hervorzuheben. Die spezifische Oberfläche ist deutlich größer als sie mit gewickelten Drahtnetzen oder gesinterten Lang- oder Kurzfasern, z.B. für Katalysatorträger, erreichbar ist. Das spezifische Gewicht kann wie die Porösität in weiten Grenzen verändert werden. Es sind niedrigere Werte möglich, als sie mit anderen Verfahren zu erreichen sind.

Abschließend werden drei Ausführungsbeispiele der vorliegenden Erfindung offenbart:
1.
   Es wurde Schleifschlamm aus dem Werkstoff 1.4021 nach einem der oben beschriebenen Verfahren entölt und getrocknet. Der Feuchtigkeitsrestgehalt betrug etwa 3%.
   Dann wurden die Späne durch Passieren eines grobmaschigen Siebes vereinzelt und in einer Keramikschale aufgefangen. Die so weiterbehandelten Späne wurden dann mit einer Keramikplatte abgedeckt und mit einem Gewicht belegt, so daß sich eine Belastung von 42 g/cm² auf die weiterbehandelten Metallspäne einstellte. Anschließend erfolgte eine Sinterung, wobei eine Glühung im Ofen eine Stunde lang bei 1.200°C und einem Atmosphärendruck von 10 Pa. Das auf diese Weise hergestellte hochporöse Bauteil hatte ein spezifisches Gewicht von 1,05 g/cm³, was einer Porösität von 86,5% entspricht.
2.
   Es wurde Schleifschlamm aus dem Werkstoff 1.4021 entölt und getrocknet. Der Feuchtigkeitsrestgehalt betrug etwa 3%. Die Späne wurden in einer Kreuzschlagmühle gemahlen und anschließend gleichmäßig in eine Keramikschale eingefüllt. Hierbei wurden die Späne lagenweise angedrückt und anschließend mit einer Keramikplatte abgedeckt. Nach einem Sinterprogramm wie im ersten Beispiel beschrieben wurde eine spezifische Dichte der Probe von 1,7 g/cm³ bestimmt.
3.
   Es wurde Schleifschlamm aus dem Werkstoff 1.4021 entölt und getrocknet. Der Feuchtigkeitsrestgehalt betrug etwa 3%. Die Späne wurden in einer Kreuzschlagmühle gemahlen und anschließend in den Spalt zwischen zwei ineinander gestellten Rohren gestampft. Das Innenrohr wurde danach entfernt und das Material dem gleichen Programm unterworfen wie in den Beispielen 1. und 2. beschrieben. Das auf diese Weise hergestellte rohrförmige Bauteil wies eine Dichte von 2,05g/cm³, entsprechend 73% Porosität auf.

## Patentansprüche

1. Verfahren zur Herstellung poröser Bauteile, wobei aus der spanabhebenden Metallbearbeitung stammende feuchte Metallspäne zunächst
- zumindest bis auf einen Restfeuchtegehalt von 5 % entfeuchtet werden,
- anschließend in einen Behälter gefüllt oder auf eine Aufbringungsfläche ausgelegt werden und schließlich
- mit oder ohne Druckbelastung gesintert werden.

2. Verfahren nach Anspruch 1, **dadurch gekennzeichnet, daß** die entfeuchteten Metallspäne vor dem Füllen in den Behälter oder Aufbringen auf die Aufbringungsfläche gesiebt, zerkleinert und/oder thermisch behandelt werden.

3. Verfahren nach Anspruch 1, **dadurch gekennzeichnet, daß** die Entfeuchtung in einem Absetzbehälter durch Zentrifugieren, Pressen und/oder thermisch oder durch Auswaschen der feuchten Metallspäne mit überkritischem CO₂ oder Waschbenzin oder dergleichen erfolgt.

4. Verfahren nach Anspruch 1, **dadurch gekennzeichnet, daß** nach dem Füllen der Metallspäne in den Behälter diese einer Zwischenverdichtung durch Stampfen, Rütteln oder Klopfen unterzogen werden.

5. Verfahren nach Anspruch 1, **dadurch gekennzeichnet, daß** der Behälter aus einem keramischen Werkstoff ist.

6. Verfahren nach Anspruch 1, **dadurch gekennzeichnet, daß** der Behälter topfartig ist.

7. Verfahren nach Anspruch 1, **dadurch gekennzeichnet, daß** der Behälter ein an einer Stirnfläche offener Hohlzylinder ist.

8. Verfahren nach Anspruch 1, **dadurch gekennzeichnet, daß** die Aufbringfläche ein Förderband eines Durchlaufofens ist oder daß rohrförmige Bauteile in einem Rohrofen im Durchlaufverfahren hergestellt werden.

9. Verfahren nach Anspruch 1, **dadurch gekennzeichnet, daß** zur Herstellung von Sandwich-Strukturen die weiterbehandelten Metallspäne zwischen Decklagen metallischer Bleche in den Behälter gefüllt werden.

10. Verfahren nach Anspruch 1, **dadurch gekennzeichnet, daß** die weiterbehandelten Metallspäne zur Herstellung von Faservliesen auf der Aufbringfläche ausgelegt werden, wobei sich benachbarte Späne zumindest tangieren.

11. Verfahren nach Anspruch 1, **dadurch gekennzeichnet, daß** die Sinterung unter Vakuumbedingungen oder Schutzgas erfolgt.

12. Verfahren nach Anspruch 1, **dadurch gekennzeichnet, daß** die Temperatur beim Sintern zwischen 0,65 und 0,95 der Solidustemperatur T_{S} des Materials liegt und/oder daß bei mehrphasigen Werkstoffen die Sintertemperatur so hoch liegt, daß eine Phase bereits angeschmolzen wird.

13. Verfahren nach Anspruch 1, **dadurch gekennzeichnet, daß** der Druck auf die weiterbehandelten Metallspäne beim Sintern zwischen 0 und 0,1 N/mm².

14. Verfahren nach Anspruch 1, **dadurch gekennzeichnet, daß** die Druckeinleitung auf die weiterbehandelten Metallspäne beim Sintern durch eine Druckplatte erfolgt.

15. Verfahren nach Anspruch 1, **dadurch gekennzeichnet, daß** die aus der Metallbearbeitung stammenden Späne gekrümmt sind und variable Querschnitte aufweisen.

16. Verfahren nach Anspruch 1, **dadurch gekennzeichnet, daß** die aus der spanabhebenden Metallbearbeitung stammenden Späne aus chromlegierten Stählen, anderer Stahl- und Gußeisenwerkstoffe, Werkstoffe auf Nickelbasis, Buntmetalle, Edelmetalle und Leichtmetalle sind.

17. Bauteil, hergestellt nach einem der Patentansprüche 1 - 16, **dadurch gekennzeichnet, daß** dieses zumindest bereichsweise porös ist.

18. Bauteil nach Anspruch 17, **dadurch gekennzeichnet, daß** die Porösität vorzugsweise 40% - 97%, besonders vorzugsweise 70% - 95% beträgt.

19. Bauteil nach Anspruch 17, **dadurch gekennzeichnet, daß** das spezifische Gewicht des porösen Bauteils das 0,03 - 0,6fache eines aus dem gleichen massiven Material hergestellten beträgt.

20. Bauteil nach Anspruch 17, **dadurch gekennzeichnet, daß** dieses ein Sandwich-Bauteil ist, welches zwischen metallischen Blechen gesinterte Abschnitte enthält.

21. Bauteil nach Anspruch 17, **dadurch gekennzeichnet, daß** dieses ein Filter für Entstaubungsanlagen, ein Filter für Abgasanlagen von Verbrennungsmotoren, ein Filter für Flüssigkeiten und Schmelzen, ein Trägerwerkstoff für Membranfilter, ein Katalysatorträger für Verbrennungsanlagen und Abgasanlagen, ein Katalysatorträger für chemische Prozesse, ein Verbundwerkstoff für Leichtbauwerkstoffe, Bremsen, Friktionswerkstoffe, Lager, eine Form für das Tiefziehen von Kunststoffen, ein Bauteil zur Schalldämmung, Schockabsorption, Schwingungsdämpfung, eine Panzerung, ein Splitterschutz, ein Bauteil zur Wärmedämmung, ein Wärmetauscher für Rekuperatoren ist.
